# EUROPÄISCHE PATENTSCHRIFT

(11) **EP 1 920 173 B1**
(45) Veröffentlichungstag und Bekanntmachung des Hinweises auf die Patenterteilung: **01.04.2009**
(21) Anmeldenummer: 06776661.8
(22) Anmeldetag: 08.08.2006
(51) Int. Cl.: F16H 37/04, F16H 37/08, F16H 1/28, F16H 13/06, B25J 9/10

(54) **GETRIEBE, INSBESONDERE GELENKGETRIEBE**
GEAR MECHANISM, IN PARTICULAR LINKAGE MECHANISM
MECANISME, EN PARTICULIER MECANISME ARTICULE

(30) Priorität: 02.09.2005 DE 102005042716
(43) Veröffentlichungstag der Anmeldung: 14.05.2008
(73) Patentinhaber: Schunk GmbH & Co. KG Spann- und Greiftechnik, 74348 Lauffen am Neckar (DE)
(72) Erfinder: HOCH, Andreas, 74388 Talheim (DE); HAAG, Matthias, 70191 Stuttgart (DE); KERPE, Stefan, 71272 Renningen (DE)
(74) Vertreter: Bulling, Alexander
(86) Internationale Anmeldenummer: PCT/EP2006/007819
(87) Internationale Veröffentlichungsnummer: WO 2007/028470

(56) Entgegenhaltungen:
- CH-A- 177 341
- DE-C- 718 600
- GB-A- 442 462
- GB-A- 922 005
- GB-A- 2 150 665
- US-A- 2 019 343
- US-A- 5 993 348
- "MOVING INTO A HIGHER GEAR" EUREKA, FINDLAY PUBLICATIONS LTD., DARTFORD, GB, Bd. 19, Nr. 1, Januar 1999 (1999-01), Seite 27, XP000790804 ISSN: 0261-2097

## Beschreibung

Die Erfindung betrifft ein Getriebe, insbesondere ein Gelenkgetriebe für eine Handhabungseinrichtung, mit einer Basiseinheit und mit einer gegenüber der Basiseinheit um eine Gelenkachse drehbar gelagerten Dreheinheit. Derartige Gelenkantriebe kommen beispielsweise in der Automatisierungs- oder Robotertechnik zum Einsatz, beispielsweise um Positionier- oder Greifbewegungen von Handhabungseinrichtungen funktionssicher zu realisieren.

Aus der DE 32 30 648 C2 ist ein Winkelwendegetriebe mit zwei nachgeschalteten Planetensätzen bekannt geworden, bei dem über eine Antriebswelle zwei entlang einer Achse angeordnete Tellerräder in entegegengesetzte Richtungen angetrieben werden.

Aus der GB 442 462, die alle Merkmale des Oberbegriffes des Gegenstandes des unabhängigen Anspruchs 1 offenbart, ist ein Umlaufgetriebe, bei dem über eine Antriebswelle zwei entlang einer Achse angeordnete Kegelräder in entegegengesetzte Richtungen angetrieben werden. Die Kegelräder weisen dabei Ritzel auf, die Stirnräder kämmen. Die Stirnräder selbst sind über Kegelritzel miteinander bewegungsgekoppelt.

Aus der GB 922 005 ist ein Untersetzungsgetriebe bekannt geworden, bei dem über eine Eingangswelle zwei entlang einer Achse angeordnete Kronenräder in entegegengesetzte Richtungen angetrieben werden. Die beiden Kronenräder sind dabei über einander gegenüberliegende Sonnenräder miteinander indirekt bewegungsgekoppelt.

Der vorliegenden Erfindung liegt dabei die Aufgabe zugrunde, Getriebe bereitzustellen, die kompakt bauen, hohe Übersetzungen realisieren und eine hohe Leistungsdichte aufweisen.

Diese Aufgabe wird gelöst durch ein Getriebe mit den Merkmalen des Anspruchs 1. Durch eine derartige Anordnung kann eine sehr kompakt bauende Getriebeeinheit realisiert werden, die eine hohe Untersetzung aufweist und große Kräfte übertragen kann. Durch die Aufteilung der Drehbewegung des Antriebskörpers auf die beiden Drehglieder und durch die gegenseitige Wirkverbindung der beiden Kopplungselemente miteinander können auf wenig Bauraum erfindungsgemäß die genannten Vorteile erzielt werden.

Vorteilhaft ist, wenn der Antriebskörper dabei senkrecht zur Gelenkachse angeordnet ist, so dass eine mit dem Antriebskörper koppelbare Antriebswelle eines Motors ebenfalls senkrecht zur Gelenkachse und koaxial oder achsparallel zur Drehachse des Antriebskörpers anordenbar ist.

Zur Erzielung einer hohen Untersetzung des Getriebes können die Wirkverbindungen der einzelnen Getriebekomponenten gemäß den drei voneinander unabhängigen und frei miteinander kombinierbaren Ansätze realisiert werden:
a) Vorsehen von unterschiedlichen Unter- bzw. Übersetzungen zwischen dem Antriebskörper und den beiden Drehgliedern,
b) Vorsehen von unterschiedlichen Unter- bzw. Übersetzungen den Drehgliedern und dem jeweiligen zugehörigen Kopplungselement, und
c) Vorsehen einer von 1 verschiedenen Unter- bzw. Übersetzung der beiden Kopplungselemente miteinander.

Je nach gestelltem Anforderungsprofil an das Getriebe können die unter a), b) und c) genannten Ansätze zur Erzielung der Drehbewegung des Drehgliedes um die Drehachse einzeln oder in Kombination miteinander realisiert werden.

Es kann eine insbesondere lediglich eine geringfügig unterschiedliche Über- bzw. Untersetzung der Drehbewegungen der Kopplungselemente vorgesehen sein, was dann letztlich zur Verdrehung der Dreheinheit gegenüber der Basiseinheit führt.

Gemäß einer Weiterbildung der Erfindung ist vorgesehen, dass die beiden Drehglieder als Hohlräder ausgebildet sind, wobei die Kopplungselemente jeweils am Innenumfang eines Hohlrades mit dem jeweiligen Hohlrad drehgekoppelt angeordnet sind. Die Kopplungselemente sind dabei so angeordnet, dass sie sich zum einen um ihre eigene, zur Gelenkachse achsparallel verlaufenden Längsachse und zum anderen um die Gelenkachse drehen können. Bei sich drehendem Antriebskörper laufen die Kopplungselemente in Art von Planeten sich um ihre eigene Längsachse drehend an den Innenumfängen der Hohlräder ab. Durch diese Ausbildung kann ein sehr kompakt bauendes Getriebe realisiert werden, da durch die in den Hohlrädern laufenden Kopplungselemente der radial innen liegende Bauraum der Hohlräder ausgenutzt wird.

Insbesondere kann dabei vorgesehen sein, dass die Innendurchmesser der beiden Hohlräder wenigstens geringfügig unterschiedlich sind. Hierdurch kann erreicht werden, dass es zu einem Verdrehen der Dreheinheit gegenüber der Basiseinheit kommt.

Eine weitere, vorteilhafte Ausführung der Erfindung sieht vor, dass die Kopplungselemente als Wellenabschnitte ausgebildet sind, die sich jeweils wenigstens abschnittsweise durch die beiden Hohlräder erstrecken und die an ihren freien Enden jeweils am Käfig drehbar gelagert angeordnet sind. Hierdurch wird eine günstige und Bauraum sparende Lagerung der Kopplungselemente erreicht.

Die Kopplungselemente können dabei jeweils einen mit dem ihm zugeordneten Hohlrad in Wirkverbindung stehenden ersten Kopplungsbereich und einen mit dem jeweils anderen Kopplungselement in Wirkverbindung stehenden zweiten Kopplungsbereich aufweisen. Die beiden Kopplungsbereiche der Kopplungselemente können dabei identisch oder unterschiedlich ausgebildet sein. Bei identisch ausgebildeten Kopplungsbereichen ist es denkbar, dass die beiden Kopplungsbereiche ineinander übergehen, was zu einer vereinfachten und damit kostengünstigeren Fertigung der Kopplungselemente führt.

Gemäß einer weiteren Ausführungsform der Erfindung kann vorgesehen sein, dass die beiden Drehglieder Außenradabschnitte aufweisen, deren Außenumfänge mit den Kopplungselementen zusammenwirken. Diese Ausführungsform hat gegenüber der Ausführungsform mit den Hohlrädern den Vorteil, dass die Drehglieder im Bereich ihrer Drehachse lagerbar sind. An den Außenumfängen laufen die entsprechenden Kopplungselemente ab. Die Außendurchmesser der beiden Außenradabschnitte können dabei unterschiedlich sein.

Erfindungsgemäß kann es ferner vorteilhaft sein, wenn der Käfig zur Verdrehung der Dreheinheit an der Basiseinheit drehbar gelagert ist. Da der Käfig verdreht wird, kann durch eine entsprechende Lagerung des Käfigs an der Basiseinheit über den Käfig die gesamte Dreheinheit verdreht werden.

Für den Fall, dass vergleichsweise hohe Kräfte über das Getriebe übertragen werden sollen, kann der Antriebskörper als Kegelritzel zwischen den beiden Drehgliedern, die dann als das Kegelritzel kämmende Kegelzahnräder ausgebildet sind, angeordnet sein. Erfindungsgemäß können auch andere Drehkopplungen vorgesehen sein. Beispielsweise kann der Antriebskörper als Reibrad zwischen den beiden Drehgliedern, die dann als vom Reibrad angetriebene Reibscheiben ausgebildet sind, ausgebildet sein. Das Reibrad kann dabei beispielsweise in einer senkrecht oder schräg zur Drehachse der Drehscheiben liegenden Ebene angeordnet sein.

Eine weitere Ausführungsform der Erfindung zeichnet sich dadurch aus, dass die beiden Drehglieder mit den Kopplungselementen und/oder die beiden Kopplungselemente miteinander über Verzahnungen oder Reibflächen drehgekoppelt sind. Das Vorsehen einer Verzahnung bietet sich insbesondere dann an, wenn vergleichsweise hohe Kräfte zu übertragen sind.

Für den Fall, dass die einzelnen, sich drehenden Bauteile über Verzahnungen miteinander bewegungsgekoppelt sind, können Verzahnungen mit unterschiedlich vielen Zähne Verwendung finden. Beispielsweise ist denkbar, dass bei der Ausführungsform, bei der die Drehglieder als Hohlräder ausgebildet sind, der Innenumfang des einen Hohlrads einen Zahn mehr beziehungsweise weniger aufweist als der Innenumfang des anderen Hohlrades.

Zur Stützung der vom Antriebskörper angetriebenen Drehglieder ist erfindungsgemäß denkbar, dass an der Basiseinheit wenigstens ein mit den Drehgliedern bewegungsgekoppelter Stützkörper vorgesehen ist. Der Stützkörper ist dabei insbesondere drehbar gelagert und folgt den Drehbewegungen der Drehglieder. Der Stützkörper kann insbesondere identisch zum Antriebskörper aufgebaut sein, wobei der Stützkörper nicht durch ein weiteres Bauteil angetrieben werden muss, sondern ausschließlich der Drehbewegung der Drehglieder folgt. Vorteilhafterweise sind über den Umfang der Drehglieder mehrere Stützkörper, insbesondere äquidistant zueinander vorgesehen. Dadurch können insbesondere hohe Kräfte zwischen der Basiseinheit und der Dreheinheit übertragen werden.

Eine vorteilhafte und kompakte Bauweise des Getriebes ergibt sich dann, wenn die Kopplungselemente zueinander achsparallel und/oder achsparallel zur Gelenkachse angeordnet sind.

Ferner ist vorteilhaft, wenn die Dreheinheit und/oder der Käfig einen radial und/oder axial zur Gelenkachse angeordneten Kopplungsabschnitt zur Anordnung weiterer Baugruppen aufweist. Weitere Baugruppen können dabei beispielsweise Distanzelemente und/oder Greifelemente und/oder weitere Getriebe und/oder Antriebseinheiten sein.

Weitere Vorteile und vorteilhafte Ausgestaltungen der Erfindung sind der nachfolgenden Beschreibung zu entnehmen, in der die Erfindung anhand der in der Zeichnung dargestellten Ausführungsbeispiele näher beschrieben und erläutert ist.

Es zeigen:
- Figur 1: eine schematische Darstellung eines Antriebskörpers mit zwei mit dem Antriebkörper drehgekoppelten Drehgliedern als Teile eines erfindungsgemäßen Gelenkgetriebes;
- Figur 2: zwei Drehglieder, welche jeweils mit einem Kopplungselement als Teile eines erfindungsgemäßen Gelenkgetriebes drehgekoppelt sind;
- Figur 3: eine schematische Darstellung gemäß Figur 1 mit Drehgliedern unterschiedlichen Durchmessers;
- Figur 4: eine der Figur 2 entsprechende schematische Darstellung, mit Drehgliedern mit unterschiedlichem Innendurchmesser;
- Figur 5: eine weitere Ausführungsform von Drehgliedern mit unterschiedlichen Kopplungselementen gemäß einem erfindungsgemäßen Gelenkgetriebe;
- Figur 6: eine weitere Ausführungsform eines erfindungsgemäßen Gelenkgetriebes in perspektivischer Außenansicht;
- Figur 7: einen Längsschnitt durch das Gelenkgetriebe gemäß Figur 6; und
- Figur 8: einen Querschnitt durch den Längsschnitt gemäß Figur 7.

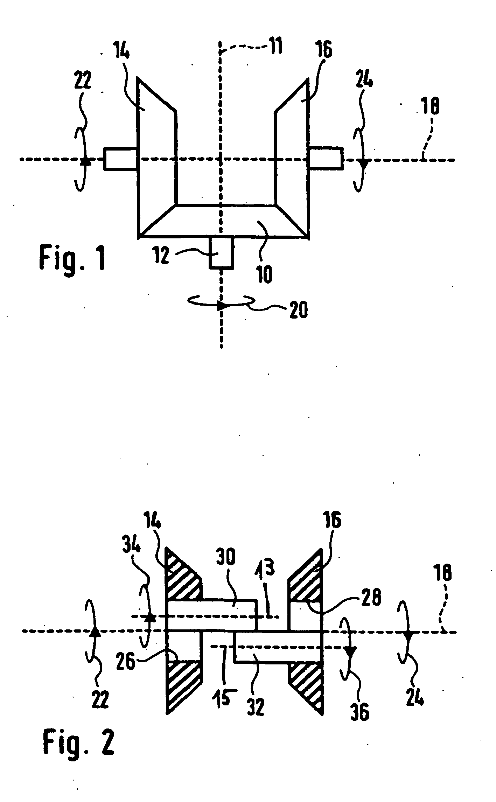

In den Figuren 1 bis 5 sind verschiedene Baugruppen erfindungsgemäßer Gelenkgetriebe schematisch dargestellt.

In der Figur 1 ist ein über einen Motor antreibbarer Antriebskörpers 10 dargestellt, dessen wellenfortsatz 12 mit einer von einem Motor, insbesondere einem Elektromotor, antreibbaren Welle drehkoppelbar ist. Der Antriebskörper 10 ist dabei als Kegelrad ausgebildet, das eine schräg verlaufende Verzahnung oder eine Reibfläche zur Drehkopplung mit zwei zueinander koaxial angeordneten Drehgliedern 14, 16 aufweist. Die Drehachse 18 der beiden Drehglieder 14, 16 ist dabei orthogonal zur Drehachse 11 des Antriebskörpers 10 angeordnet. Die Drehglieder 14, 16 sind ebenfalls kegelradförmig ausgebildet, mit einer zur Drehachse 18 schräg verlaufenden Verzahnung beziehungsweise Reibfläche.

Beim Drehen des Antriebskörpers 10 in der mit dem Pfeil 20 angedeuteten Drehrichtung verdrehen sich die beiden Drehglieder 14, 16 in unterschiedliche Richtungen, die mit den Pfeilen 22, 24 angedeutet sind.

In der Figur 2, in der der Antriebskörper 10 nicht dargestellt ist, sind die beiden Drehglieder 14, 16 als Hohlräder ausgebildet. Am Innenumfang 26 des einen Hohlrads 14 und am Innenumfang 28 des anderen Hohlrads 16 ist jeweils ein um seine jeweilige Längsachse 13, 15 drehbar gelagertes Kopplungselement 30, 32 drehgekoppelt angeordnet. Die beiden Kopplungselemente 30, 32 können dabei beispielsweise über eine Verzahnung oder eine Reibfläche mit dem jeweiligen Innenumfang in Wirkverbindung stehen.

Eine Drehbewegung des Drehglieds 14 bzw. 16 um die Drehachse 18 bewirkt eine Drehbewegung des Koppelelements 30 bzw. 32 um seine jeweilige Längsachse 13 bzw. 15.

Wie aus der Figur 2 ferner deutlich wird, stehen auch die beiden Kopplungselemente 30, 32 miteinander in Wirkverbindung. Sie können dabei über Reibflächen oder Verzahnungen miteinander drehgekoppelt sein.

Beim Verdrehen des Drehglieds 14 in die Drehrichtung 22 wird über die Drehkopplung des Kopplungselements 30 mit dem Drehglied 14 das Kopplungselement 30 um seine Längsachse 13 in die mit dem Pfeil 34 angedeutete Drehrichtung verdreht. Entsprechend wird beim verdrehen des Drehglieds 16 das Kopplungselement 32 um seine Längsachse 15 in die Drehrichtung 36 verdreht. Gemäß der Erfindung ist vorgesehen, dass der Aufbau derart ist, dass die Längsachsen 13, 15 der beiden Kopplungselemente 30, 32, die beide an einem in den Figuren 1 bis 5 nicht dargestellten Käfig drehbar angeordnet sind, beim verdrehen der Drehglieder 14, 16 ihre relative Lage bezüglich der Drehachse 18 verändern.

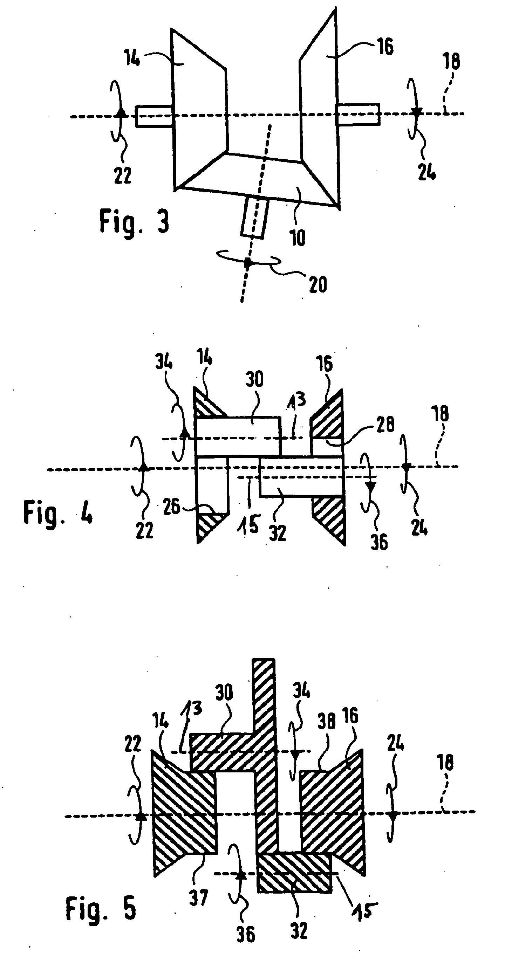

In der Figur 3 ist eine Ausführungsform dargestellt, bei der das Übersetzungsverhältnis vom Antriebskörper 10 zu den beiden Drehgliedern 14, 16 unterschiedlich ist. Hierdurch wird eine unterschiedliche Drehzahl der gegenläufigen Drehglieder 14, 16 beim Verdrehen des Antriebskörpers 10 erreicht. Bei einem sonst der Figur 2 entsprechenden Aufbau bewegen sich die Kopplungselemente 30, 32 entsprechend Planeten, die sich jeweils um ihre eigene Längsachse 13, 15 drehen, zusätzlich um die Achse 18. Der bereits erwähnte, in den Figuren 1 bis 5 nicht dargestellte Käfig, der die Koppelungselemente 30, 32 aufnimmt, erfährt dann ebenfalls eine Drehung um die Drehachse 18. Die Drehachse 18 stellt dann die Gelenkachse dar, wobei der Käfig Teil einer Dreheinheit ist, die dann um die Gelenkachse 18 verdreht wird.

Zur Erreichung unterschiedlicher Drehzahlen der Drehglieder 14 und 16 ist es nicht zwangsweise erforderlich, dass, wie in der Figur 3 dargestellt, die Drehachse des Antriebskörpers 10 mit einem von 90° verschiedenen Winkel zur Drehachse 18 verlaufen muss. Erfindungsgemäß können unterschiedliche Drehzahlen auch bei orthogonaler Anordnung erzielt werden, beispielsweise durch Vorsehen von Verzahnungen am Antriebskörper 10 und den Drehgliedern 14, 16, wobei die Verzahnung des Drehgliedes 14 dann unterschiedlich zur Verzahnung des Drehgliedes 16 ausgebildet ist.

In der Figur 4 wird eine Relativbewegung der Längsachsen 13, 15 der beiden Kopplungselemente 30, 32 um die Drehachse 18 durch eine unterschiedliche Übersetzung der Kopplungselemente 30, 32 gegenüber den ihnen jeweils zugeordneten Drehgliedern 14, 16 erreicht. Beim Vorsehen von Hohlrädern, wie in der Figur 2 und Figur 4 gezeigt, kann dies durch unterschiedliche Innendurchmesser 26, 28 der beiden Hohlräder 14, 16 erreicht werden. In der Figur 4 ist der Innendurchmesser 26 des Hohlrads 14 größer als der Innendurchmesser 28 des Hohlrads 16. Werden zur Drehkopplung an den Innenumfängen 26, 28 Verzahnungen und entsprechend an den Kopplungselementen die Verzahnungen der Drehglieder 14, 16 kämmende Gegenverzahnungen vorgesehen, so kann eine Relativbewegung der beiden Kopplungselemente 30, 32 um die Drehachse 18 durch wenigstens geringfügig unterschiedliche Verzahnungen realisiert sein. Dabei ist denkbar, dass die kopplungselementseitigen Verzahnungen identisch sind und dass an den Innenumfängen 26, 28 jeweils Verzahnungen mit unterschiedlich vielen Zähnen vorgesehen sind.

Figur 5 zeigt eine weitere denkbare erfindungsgemäße Anordnung. Zum einen sehen die beiden Drehglieder 14, 16 in der Figur 5 jeweils Außenradabschnitte 37, 38 vor, die mit den Kopplungselementen 30, 32 drehgekoppelt sind. Zum anderen ist die Wirkverbindung der beiden Kopplungselemente 30, 32 miteinander derart ausgebildet, dass das zugehörige Übersetzungsverhältnis ungleich eins ist. Bei sich drehenden Drehgliedern 14, 16 ergibt sich eine Relativbewegung der Drehachsen 13, 15 der Kopplungselemente 30, 32 um die Achse 18.

Zur vereinfachten Darstellung ist in den Figuren 4 und 5 der Antriebskörper 10 nicht dargestellt.

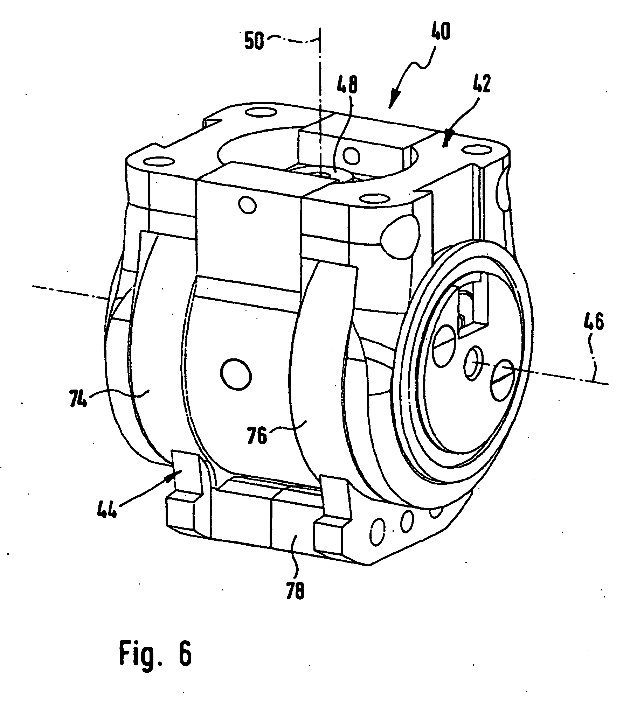

Das in den Figuren 6 bis 8 dargestellte erfindungsgemäße Gelenkgetriebe umfasst eine Basiseinheit 42 und eine um eine Gelenkachse 46 drehbar gelagerte Dreheinheit 44. Die Basiseinheit 42 umfasst einen senkrecht zur Gelenkachse 46 drehbar gelagerten und von einer Motorwelle antreibbaren Antriebskörpers 48, dessen Drehachse mit dem Bezugszeichen 50 gekennzeichnet ist. Zum Antrieb des Antriebskörpers 48 kann beispielsweise an der Basiseinheit eine Antriebseinheit befestigt sein.

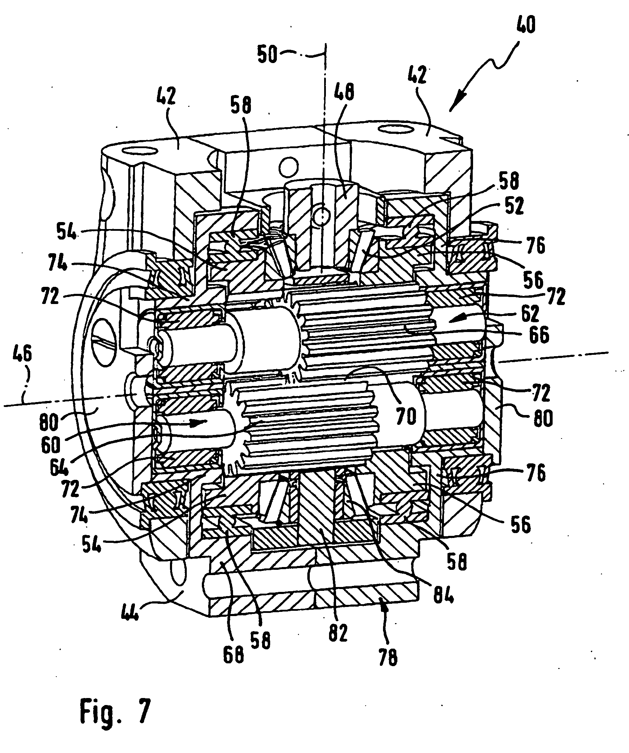

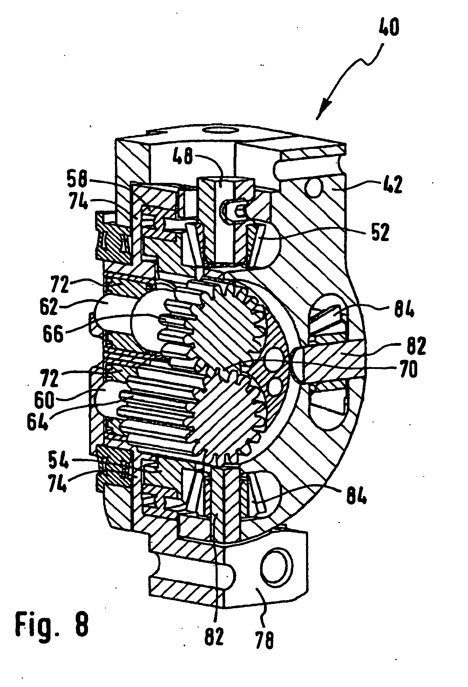

Wie insbesondere in den Schnitten gemäß Figur 7 und 8 deutlich wird, weist der Antriebskörper 48 ein Kegelradritzel 52 auf, das zwei drehbar gelagerte, koaxial entlang der Gelenkachse 46 angeordnete Drehglieder 54, 56 in entgegengesetzter Drehrichtung antreibt. Die beiden Drehglieder 54, 56 sind dabei als Kegelzahnräder mit einander zugewandten Verzahnungen ausgebildet, die die Verzahnung des Antriebskörpers 48 kämmen. Die Drehglieder 54, 56 sind zudem als Hohlräder ausgeführt, die an ihrem axialen Außenumfang über entsprechende Lagerelemente 58 drehbar gelagert sind.

Der Gelenkantrieb 40 sieht ferner zwei Kopplungselemente 60, 62 vor, wobei das Kopplungselement 60 derart mit dem Innenumfang des Drehglieds 54 in Wirkverbindung steht, dass das Kopplungselement 60 bei sich drehendem Drehglied 54 um die eigene Achse drehend angetrieben wird. Entsprechend ist das Kopplungselement 62 mit dem Innenumfang des Drehglieds 56 drehgekoppelt. Zur Drehkopplung zwischen den Drehgliedern 54, 56 und den Kopplungselementen 60, 62 weisen die Drehglieder 54, 56 an ihren Innenumfängen Verzahnungen auf, die an den Außenumfängen der Kopplungselemente 60, 62 vorhandenen Verzahnungen 64, 66 kämmen. Die wellenartig ausgebildeten Kopplungselemente 60, 62 sind an ihren jeweils freien Enden an einem Käfig 68 um ihre eigenen Längsachsen drehbar gelagert angeordnet. Im mittleren Bereich der Kopplungselemente 60, 62 sind die beiden Kopplungselemente 60, 62 über einen gemeinsamen Verzahnungsbereich 70 miteinander drehgekoppelt. Wie aus insbesondere Figur 7 deutlich wird, geht der Verzahnungsbereich der Verzahnung 64 des Kopplungselements 60, der mit dem Innenumfang des Drehglieds 54 in Wirkverbindung steht, über in den Bereich 70 der Verzahnung 64, der mit dem anderen Kopplungselement 62 in Wirkverbindung steht. Entsprechend geht der Verzahnungsbereich der Verzahnung 66 des Kopplungselements 62, der mit dem Drehglied 56 in Wirkverbindung steht, in den Verzahnungsbereich 70 über, der die Verzahnung 64 des anderen Kopplungselements 60 kämmt.

Der Käfig 68, der insgesamt U-artig ausgebildet ist, weist an seinen parallel verlaufenden Schenkeln 74 und 76 Lagerelemente 72 zur drehbaren Lagerung der freien Enden der Kopplungselemente 60 und 62 auf. An seinem die beiden Schenkel 74 und 76 verbindenden Bereich weist der Käfig 68 einen Kopplungsabschnitt 78 zur Anordnung weiterer Baugruppen auf. An seinen in Richtung der Gelenkachse 46 axial außen liegenden Bereichen ist der Käfig 68 mit zwei Gehäuseelementen 80 abgedeckt. Erfindungsgemäß wäre es denkbar, dass an den Gehäuseelementen 80 ebenfalls Kopplungsabschnitte zur Anordnung weiterer Baugruppen vorgesehen sind.

Wird der Antriebskörper 48 von einem Motor angetrieben, so drehen sich die beiden Drehglieder 54, 56 in entgegengesetzte Drehrichtungen mit gleicher Drehzahl. Dabei weisen beide Drehglieder einander zugewandte, identische Außenkegelverzahnungen auf. Die Innenverzahnungen der beiden Drehglieder 54 und 56 unterscheiden sich vorteilhafterweise um lediglich einen Zahn. Hierdurch und aufgrund der gemeinsamen Drehkopplung der Kopplungselemente 60, 62 wird eine Relativbewegung der Längsachsen der Kopplungselemente 60, 62 um die Gelenkachse 46 bewirkt. Aufgrund der Lagerung der Kopplungselemente 60, 62 am Käfig bewegt sich dann bei Drehung des Antriebskörpers 48 der Käfig um die Gelenkachse 46. Die Dreheinheit 44, die insbesondere vom Käfig 68, den Schenkeln 74, 76 sowie den beiden Gehäuseelementen 80 gebildet wird, führt letzten Endes gegenüber dem Basisteil 42 eine Drehbewegung um die Achse 46 durch.

Zur besseren Abstützung der beiden Drehglieder 54, 56 ist vorgesehen, dass an der Basiseinheit 42 insgesamt vier Stützkörper 82 vorgesehen sind. Die Stützkörper 82 umfassen dabei dem Kegelradritzel 52 entsprechende, drehbar gelagerte Kegelzahnräder 84, an denen die Verzahnungen der Drehglieder 54, 56 ablaufen.

Anstelle des Vorsehens von Verzahnungen, wie zu den Figuren 6 bis 8 erläutert, können auch entsprechende Reibkörper beziehungsweise Reibflächen vorgesehen sein.

Aufgrund des erläuterten Aufbaus des Gelenkgetriebes 40 kann ein Gelenkgetriebe bereitgestellt werden, das über einen senkrecht zur Gelenkachse 46 antreibbaren Antriebskörper 48 angetrieben werden kann, das sehr kompakt baut, das eine sehr hohe Untersetzung aufweist und mit welchem zudem sehr hohe Kräfte übertragen werden können.

## Patentansprüche

1. Getriebe (40), insbesondere ein Gelenkgetriebe für eine Handhabungseinrichtung, mit einer Basiseinheit (42) und einer gegenüber der Basiseinheit um eine Gelenkachse (46; 18) drehbar gelagerten Dreheinheit (44), wobei die Basiseinheit (42) einen drehbar antreibbaren Antriebskörper (48; 10) aufweist,
mit zwei drehbar gelagerten, vom Antriebskörper (48; 10) gegenläufig antreibbaren Drehgliedern (54, 56; 14, 16), wobei jedes der Drehglieder (54, 56; 14, 16) bei drehendem Antriebskörper (48; 10) ein Kopplungselement (60, 62; 30, 32) antreibt, **dadurch gekennzeichnet, dass**
die beiden Kopplungselemente (60, 62; 30, 32) in einem Käfig (68) der Dreheinheit (44) um ihre jeweilige Längsachse (13, 15) achsparallel zueinander angeordnet, drehbar gelagert und miteinander direkt gegenseitig drehgekoppelt angeordnet sind und **dass**
der Antriebskörper (48; 10) mit den Drehgliedern (54, 56; 14, 16), die Drehglieder (54, 56; 14, 16) mit dem jeweiligen Kopplungselement (60, 62; 30, 32) und die beiden Kopplungselemente (60, 62; 30, 32) miteinander derart wirkverbunden sind, dass der Käfig (68) samt Dreheinheit (44) bei angetriebenen Kopplungselementen (60, 62; 30, 32) um die Gelenkachse (46; 18) verdreht wird.

2. Getriebe (40) nach Anspruch 1, **dadurch gekennzeichnet, dass** die Drehglieder (56, 56; 14, 16) vom Antriebskörper (48; 10) und/oder die beiden Kopplungselemente (60, 62; 30, 32) vom jeweiligen Drehglied (54, 56; 14, 16) mit unterschiedlichen Unter- oder Übersetzungen angetrieben werden und/oder dass das Übersetzungsverhältnis der beiden Kopplungselemente (60, 62; 30, 32) zueinander ungleich eins ist.

3. Getriebe (40) nach Anspruch 1 oder 2, **dadurch gekennzeichnet, dass** die beiden Drehglieder (54, 56; 14, 16) als Hohlräder ausgebildet sind, wobei die Kopplungselemente (60, 62; 30, 32) jeweils an einem Innenumfang eines Hohlrades mit dem jeweiligen Hohlrad drehgekoppelt angeordnet sind.

4. Getriebe (40) nach Anspruch 3, **dadurch gekennzeichnet, dass** die Innendurchmesser und/oder an den Innendurchmessern vorgesehene Innenverzahnungen der beiden Hohlräder (54, 56; 14, 16) unterschiedlich sind.

5. Getriebe (40) nach Anspruch 3 oder 4, **dadurch gekennzeichnet, dass** die Kopplungselemente (60, 62; 30, 32) als Wellenabschnitte ausgebildet sind, die sich jeweils wenigstens abschnittsweise durch die beiden Hohlräder (54, 56; 14, 16) erstrecken und an ihren freien Enden jeweils am Käfig (68) um ihre jeweilige Längsachse drehbar gelagert angeordnet sind.

6. Getriebe (40) nach Anspruch 3, 4 oder 5, **dadurch gekennzeichnet, dass** die Kopplungselemente (60, 62; 30, 32) jeweils einen mit dem ihm zugeordneten Hohlrad (54, 56; 14, 16) in Wirkverbindung stehenden ersten Koppelbereich und einen mit dem jeweils anderen Kopplungselement in Wirkverbindung stehenden zweiten Koppelbereich (70) aufweisen.

7. Getriebe (40) nach Anspruch 6, **dadurch gekennzeichnet, dass** die beiden Koppelbereiche eines Kopplungselements (60,62) ineinander übergehen.

8. Getriebe (40) nach einem der Ansprüche 1 oder 2, **dadurch gekennzeichnet, dass** die beiden Drehglieder (14, 16) Außenradabschnitte (37, 38) aufweisen, deren Außenumfänge mit den Kopplungselementen (30, 32) zusammenwirken.

9. Getriebe (40) nach Anspruch 8, **dadurch gekennzeichnet, dass** die Außendurchmesser und/oder Außenradverzahnungen an den Außendurchmessern der beiden Außenradabschnitte unterschiedlich sind.

10. Getriebe (40) nach einem der vorhergehenden Ansprüche, **dadurch gekennzeichnet, dass** der Käfig (68) zur Verdrehung der Dreheinheit an der Basiseinheit und/oder an den Drehgliedern (54, 56) drehbar gelagert angeordnet ist.

11. Getriebe (40) nach einem der vorhergehenden Ansprüche, **dadurch gekennzeichnet, dass** der Antriebskörper (48; 10) als Kegelritzel zwischen den beiden Drehgliedern, die als das Kegelritzel kämmende Kegelzahnräder ausgebildet sind, angeordnet ist.

12. Getriebe (40) nach einem der vorhergehenden Ansprüche, **dadurch gekennzeichnet, dass** der Antriebskörper als Reibrad zwischen den beiden Drehgliedern, die als vom Reibrad angetriebene Reibscheiben ausgebildet sind, ausgebildet ist.

13. Getriebe (40) nach einem der vorhergehenden Ansprüche, **dadurch gekennzeichnet, dass** die beiden Drehglieder (54, 56; 30, 32) mit den Kopplungselementen (60, 62; 30, 32) und/oder die beiden Kopplungselemente miteinander über Verzahnungen oder Reibflächen drehgekoppelt sind.

14. Getriebe (40) nach einem der vorhergehenden Ansprüche, **dadurch gekennzeichnet, dass** an der Basiseinheit (42) wenigstens ein mit den Drehgliedern (54, 56; 14; 16) bewegungsgekoppelter Stützkörper (82) zur Abstützung der Drehglieder angeordnet ist.

15. Getriebe (40) nach einem der vorhergehenden Ansprüche, **dadurch gekennzeichnet, dass** die beiden Kopplungselemente achsparallel zur Gelenkachse (46; 18) angeordnet sind.

16. Getriebe (40) nach wenigstens einem der vorhergehenden Ansprüche, **dadurch gekennzeichnet, dass** die Dreheinheit (44) und/oder der Käfig (68) einen radial und/oder axial zur Gelenkachse (46) angeordneten Kopplungsabschnitt (78) zur Anordnung weiterer Baugruppen aufweist.

## Claims

1. A gearbox (40), in particular a linkage gear for a handling device, comprising a base unit (42) and a rotating unit (44) that is rotationally supported against the base unit around a linkage axis (46; 18), whereby the base unit (42) exhibits a rotationally drivable drive element (48; 10),
with two rotationally supported rotating members (54, 56; 14, 16) that can be driven in opposite directions by the drive element (48; 10), whereby each of the rotating members (54, 56; 14, 16) drives a coupling element (60, 62; 30, 32) when the drive element (48; 10) turns, **characterized in that** the two coupling elements (60, 62; 30, 32) are arranged in a cage (68) of the rotating unit (44) axis-parallel to each other around their respective longitudinal axis (13,15), rotationally supported and directly rotationally coupled with each other and that the drive element (48; 10) is functionally coupled with the rotating members (54, 56; 14, 16), the rotating members (54, 56; 14, 16) with the respective coupling element (60, 62; 30, 32) and the two coupling elements (60, 62; 30, 32) with each other such that the cage (68) together with the rotating unit (44) rotates around the linkage axis (46; 18) when the coupling elements (60, 62; 30, 32) are driven.

2. A gearbox (40) in accordance with claim 1, **characterized in that** the rotating members (54, 56; 14, 16) are driven by the drive element (48; 10) and/or the two coupling elements (60, 62; 30, 32) by the respective rotating member (54, 56; 14, 16) with different reducing or gear ratios, and/or that the gear ratio of the two coupling elements (60, 62; 30, 32) in relation to each other does not equal one.

3. A gearbox (40) in accordance with claim 1 or 2, **characterized in that** the two rotating members (54, 56; 14, 16) are designed as gear rings, whereby the coupling elements (60, 62; 30, 32) are each rotationally coupled with the respective gear ring at the inner circumference of the gear ring.

4. A gearbox (40) in accordance with claim 3, **characterized in that** the inner diameters and/or the toothings provided at the inner diameters of the two gear rings (54, 56; 14, 16) are different from each other.

5. A gearbox (40) in accordance with claim 3 or 4, **characterized in that** the coupling elements (60, 62; 30, 32) are designed as shaft sections that at least in sections extend through the two gear rings (54, 56; 14, 16) and are each at their free ends rotationally supported at the age (68) around their respective longitudinal axis.

6. A gearbox (40) in accordance with claim 3, 4 or 5, **characterized in that** the coupling elements (60, 62; 30, 32) respectively exhibit a first coupling area that is functionally coupled to the gear ring (54, 56; 14, 16) that is assigned to it and a second coupling area (70) that is functionally coupled to the respective other coupling element.

7. A gearbox (40) in accordance with claim 6, **characterized in that** the two coupling areas of a coupling element (60, 62) transition into one another.

8. A gearbox (40) in accordance with one of the claims 1 or 2, **characterized in that** the two rotating members (14, 16) exhibit outer wheel sections (37, 38) whose outer circumferences interact with the coupling elements (30, 32).

9. A gearbox (40) in accordance with claim 8, **characterized in that** the outer diameters and/or the outer wheel toothings at the outer diameters of the two outer wheel sections are different from each other.

10. A gearbox (40) in accordance with one of the preceding claims, **characterized in that** the cage (68) is rotationally supported for the purpose of turning the rotating unit at the base unit and/or at the rotating members (54, 56).

11. A gearbox (40) in accordance with one of the preceding claims, **characterized in that** the drive element (48; 10) is arranged as a bevel pinion between the two rotating members, which are designed as bevel gear wheels that mesh with the bevel pinion.

12. A gearbox (40) in accordance with one of the preceding claims, **characterized in that** the drive element is arranged as a friction wheel between the two rotating members, which are designed as friction discs driven by the friction wheel.

13. A gearbox (40) in accordance with one of the preceding claims, **characterized in that** the two rotating members (54, 56; 30, 32) are rotationally coupled with the coupling elements (60, 62; 30, 32) and/or the two coupling elements are rotationally coupled with each other via toothings or friction surfaces.

14. A gearbox (40) in accordance with one of the preceding claims, **characterized in that** at the base unit (42) at least one support element (82) is movably coupled with the rotating members (54, 56; 14, 16) for supporting the rotating members.

15. A gearbox (40) in accordance with one of the preceding claims, **characterized in that** the two coupling elements are arranged axis-parallel to the linkage axis (46; 18).

16. A gearbox (40) in accordance with at least one of the preceding claims, **characterized in that** the rotating unit (44) and/or the cage (68) exhibits a coupling section (78) that is arranged radially and/or axially to the linkage axis (46) for arranging additional components.

## Revendications

1. Mécanisme (40), en particulier un mécanisme articulé pour un dispositif de manipulation, comportant une unité de base (42) et une unité rotative (44) montée de manière à pouvoir tourner par rapport à l'unité de base (42) autour d'un axe d'articulation (46 ; 18), l'unité de base (42) étant munie d'un corps d'entraînement (48 ; 10) apte à être entraîné en rotation, comportant deux organes tournants (54, 56 ; 14, 16), montés de manière rotative, aptes à être entraînés en sens inverse par le corps d'entraînement (48 ; 10), chacun des deux organes tournants (54, 56 ; 14, 16) actionnant un élément de couplage (60, 62 ; 30, 32) lorsque le corps d'entraînement (48 ; 10) tourne, **caractérisé en ce que** les deux éléments de couplage (60, 62 ; 30, 32) sont disposés parallèlement entre eux et à l'axe dans une cage (68) de l'unité rotative (44), sont montés de manière à pouvoir tourner autour de leur axe longitudinal (13, 15) respectif et sont directement couplés en rotation inverse l'un avec l'autre, et **en ce que** le corps d'entraînement (48 ; 10) avec les organes tournants (54, 56 ; 14, 16), les organes tournants (54, 56 ; 14, 16) avec leur élément de couplage (60, 62 ; 30, 32) respectif et les deux éléments de couplage (60, 62 ; 30, 32) sont reliés activement entre eux, de telle sorte que la cage (68), conjointement avec l'unité rotative (44), est entraînée en rotation autour de l'axe d'articulation (46 ; 18) lorsque les éléments de couplage (60, 62 ; 30, 32) sont actionnés.

2. Mécanisme (40) selon la revendication 1, **caractérisé en ce que** les organes tournants (54, 56 ; 14, 16) sont actionnés par le corps d'entraînement (48 ; 10) et/ou les deux éléments de couplage (60, 62 ; 30, 32) sont actionnés par l'organe tournant (54, 56 ; 14, 16) correspondant avec des démultiplications ou des multiplications différentes et/ou **en ce que** le rapport de multiplication des deux éléments de couplage (60, 62 ; 30, 32) entre eux est différent de un.

3. Mécanisme (40) selon la revendication 1 ou 2, **caractérisé en ce que** les deux organes tournants (54, 56 ; 14, 16) sont réalisés sous forme de couronnes, les éléments de couplage (60, 62 ; 30, 32) étant disposés chacun sur un pourtour intérieur d'une couronne de manière à être couplés en rotation avec la couronne correspondante.

4. Mécanisme (40) selon la revendication 3, **caractérisé en ce que** les diamètres intérieurs et/ou les dentures intérieures, prévues sur les diamètres intérieurs, des deux couronnes (54, 56 ; 14, 16) sont différents.

5. Mécanisme (40) selon la revendication 3 ou 4, **caractérisé en ce que** les éléments de couplage (60, 62 ; 30, 32) sont réalisés sous la forme de tronçons d'arbre, qui s'étendent chacun au moins par zones à travers les deux couronnes (54, 56 ; 14, 16) et dont les extrémités libres sont disposées contre la cage (68) de manière à pouvoir tourner autour de leur axe longitudinal respectif.

6. Mécanisme (40) selon la revendication 3, 4 ou 5, **caractérisé en ce que** les éléments de couplage (60, 62 ; 30, 32) comportent chacun une première zone de couplage en liaison active avec la couronne (54, 56 ; 14, 16) qui leur est associée et une deuxième zone de couplage (70) en liaison active avec respectivement l'autre élément de couplage.

7. Mécanisme (40) selon la revendication 6, **caractérisé en ce que** les deux zones de couplage se fondent l'une dans l'autre pour former un élément de couplage (60, 62).

8. Mécanisme (40) selon la revendication 1 ou 2, **caractérisé en ce que** les deux organes tournants (14, 16) comportent des parties extérieures (37, 38) dont les pourtours extérieurs coopèrent avec les éléments de couplage (30, 32).

9. Mécanisme (40) selon la revendication 8, **caractérisé en ce que** les diamètres extérieurs et/ou les dentures extérieures sur les diamètres extérieurs desdites deux parties extérieures sont différents.

10. Mécanisme (40) selon au moins l'une des revendications précédentes, **caractérisé en ce que** la cage (68), en vue de la rotation de l'unité rotative, est montée de manière à pouvoir tourner sur l'unité de base et/ou les organes tournants (54, 56).

11. Mécanisme (40) selon au moins l'une des revendications précédentes, **caractérisé en ce que** le corps d'entraînement (48 ; 10) est disposé sous la forme d'un pignon conique entre les deux organes tournants, qui sont réalisés sous la forme de roues dentées coniques engrenant avec le pignon conique.

12. Mécanisme (40) selon au moins l'une des revendications précédentes, **caractérisé en ce que** le corps d'entraînement est réalisé sous la forme d'une roue de friction entre les deux organes tournants, qui sont réalisés sous la forme de disques de friction actionnés par la roue de friction.

13. Mécanisme (40) selon au moins l'une des revendications précédentes, **caractérisé en ce que** les deux organes tournants (54, 56 ; 14, 16) sont couplés en rotation avec les éléments de couplage (60, 62 ; 30, 32) et/ou les deux éléments de couplage sont couplés en rotation entre eux par l'intermédiaire de dentures ou de surfaces de friction.

14. Mécanisme (40) selon au moins l'une des revendications précédentes, **caractérisé en ce qu'**au moins un corps de support (82), couplé en mouvement avec les organes tournants (54, 56 ; 14, 16) et destiné à supporter lesdits organes tournants, est disposé sur l'unité de base (42).

15. Mécanisme (40) selon au moins l'une des revendications précédentes, **caractérisé en ce que** les deux éléments de couplage sont disposés parallèlement à l'axe d'articulation (46 ; 18).

16. Mécanisme (40) selon au moins l'une des revendications précédentes, **caractérisé en ce que** l'unité rotative (44) et/ou la cage (68) comportent une partie de couplage (78), disposée radialement et/ou axialement par rapport à l'axe d'articulation (46) et destinée au montage d'autres modules.
